# EUROPEAN PATENT SPECIFICATION

(11) **EP 1 602 211 B1**
(45) Date of publication and mention of the grant of the patent: **09.05.2007**
(21) Application number: 04717982.5
(22) Date of filing: 05.03.2004
(51) Int. Cl.: H04L 25/49

(54) **SYSTEM AND METHOD FOR DATA COMMUNICATIONS USING AN ADAPTIVE PULSE WIDTH MODULATION PROTOCOL**
VERFAHREN UND VORRICHTUNG ZUR DATENKOMMUNIKATION UNTER VERWENDUNG EINES ADAPTIVEN PULSBREITENMODULATOR PROTOKOLLS
SYSTÈME ET PROCÉDÉ DE COMMUNICATION DE DONNÉES UTILISANT UN PROTOCOLE DE MODULATION D'IMPULSIONS EN LARGEUR ADAPTATIF

(30) Priority: 07.03.2003 US 383294
(43) Date of publication of application: 07.12.2005
(73) Proprietor: ELECTRONIC DATA SYSTEMS CORPORATION, Plano, TX 75024 (US)
(72) Inventor: LEI, Wanli, Farming Hills, MI 48336 (US)
(74) Representative: Lawrence, John
(86) International application number: PCT/US2004/006654
(87) International publication number: WO 2004/082188

(56) References cited:
- EP-A- 0 911 817
- GB-A- 2 271 033

## Description

### TECHNICAL FIELD OF THE INVENTION

The present invention is directed, in general, to data communications and in particular to improved pulse width modulation (PWM) communications.

### BACKGROUND OF THE INVENTION

EPO 911 817 discloses an apparatus and method for optical disk reproduction. The apparatus is an optical disk apparatus for irradiating with a laser beam an optical disk on which address marks are recorded at intervals on a pulse width modulation method.

There are many different data transmission protocols used for communications between both simple and complex data processing devices. One common protocol, used frequently in radio-frequency (RF) and optical or infrared transmissions, is pulse width modulation (PWM), also called pulse duration modulation.

While differing and specific PWM methods are known to those of skill in the art, and therefore are not repeated here, one common limitation of these methods are that they require defined pulse widths to differentiate between bits.

That is, PWM protocols differentiate between one and zeros (using binary code as an example) by differing-width pulses in a carrier, whether the carrier is wired, RF, optical, or infrared. Generally, and for purposes of example, an on-pulse is used to represent data, with the off-state separating different bits. A pulse-duration threshold is predefined, and any on-pulses that are longer than the threshold (long pluses) are treated as a logical "1", and any on-pulses that are shorter than the threshold (short pulses) are treated as a logical "0". Of course, these designations can differ according to particular implementations.

For example, if the duration threshold is 500 microseconds (us), then when a series of pulses are received, all pulses with a duration greater than 500us are translated as a logical "1", and any with a duration of less than 500us will be treated as a logical "0". Each pulse must be separated by an off-state, to define the pulses. In some implementations, the duration of the off-state is also measured and also translated into data.

The common weakness of known PWM techniques is that the duration threshold must be predefined for both the transmitter and receiver. If different thresholds are used by each, then the data is corrupted or useless. If the receiver's threshold is smaller than the sender's threshold, then the sender's short pulses may be read by the receiver as long pulses. Conversely, if the receiver's threshold is greater than the sender's threshold, then the sender's long pulses may be read by the receiver as short pulses.

This weakness creates compatibility issues between different devices. For two devices to communicate using known PWM techniques, each must use the same predefined duration threshold. Unfortunately, this duration threshold is not standardized, so many different devices use different duration threshold communications, and therefore cannot communicate with each other. In an environment with many different PWM-protocol devices, such as in an assembly plant where many sensors can transmit an RF PWM data string, each device may require a different receiver.

There is, therefore, a need in the art for a system and method to easily communicate with PWM-protocol devices with differing pulse duration thresholds.

### SUMMARY OF THE INVENTION

To address the above-discussed deficiencies of the prior art, it is a primary object of the present invention to provide improved data communications. It is another object of the present invention to provide improved pulse width modulation (PWM) communications.

According to the invention there is provided a method for data communications, comprising: receiving a series of data pulses having at least one first type of data pulse and at least one second type of data pulse, whereby the duration of the first type of data pulse is greater than the duration of the second type of data pulse; storing the duration of each data pulse; calculating the average of the longest-duration data pulse and the shortest-duration data pulse to determine a threshold value; interpreting pulses having a duration that is longer than the threshold value as a first data value; and interpreting pulses having a duration that is shorter than the threshold value as a second data value.

The invention also provides an apparatus for data communications, comprising: means for receiving a series of data pulses having at least one first type of data pulse and at least one second type of data pulse, whereby the duration of the first type of data pulse is greater than the duration of the second type of data pulse; means for storing the duration of each data pulse; means for calculating the average of the longest- duration data pulse and the shortest-duration data pulse to determine a threshold value; means for interpreting pulses having a duration that is longer than the threshold value as a first data value; and means for interpreting pulses having a duration that is shorter than the threshold value as a second data value.

The invention further provides a computer readable medium comprising computer code for carrying out the method of claim 1 when run on a computer, comprising: instructions for receiving a series of data pulses having at least one first type of data pulse and at least one second type of data pulse, whereby the duration of the first type of data pulse is greater than the duration of the second type of data pulse; instructions for storing the duration of each data pulse; instructions for calculating the average of the longest-duration data pulse and the shortest-duration data pulse to determine a threshold value; instructions for interpreting pulses having a duration that is longer than the threshold value as a first data value; and instructions for interpreting pulses having a duration that is shorter than the threshold value as a second data value.

The preferred embodiment provides a system and method for pulse-width-modulation (PWM) communications using an adaptive pulse-duration threshold. In this embodiment, a PWM device will analyze a data string from a PWM transmission from a second device, and adaptively determine an appropriate pulse-duration threshold for that communication. After doing so, the PWM device can then receive and transmit data as needed with the second device. This adaptive PWM protocol can enable effective communications with multiple devices with different configurations.

The foregoing has outlined rather broadly the features and technical advantages of the present invention so that those skilled in the art may better understand the detailed description of the invention that follows. Additional features and advantages of the invention will be described hereinafter that form the subject of the claims of the invention. Those skilled in the art will appreciate that they may readily use the conception and the specific embodiment disclosed as a basis for modifying or designing other structures for carrying out the same purposes of the present invention. Those skilled in the art will also realize that such equivalent constructions do not depart from the spirit and scope of the invention in its broadest form.

Before undertaking the DETAILED DESCRIPTION OF THE INVENTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases.

### BRIEF DESCRIPTION OF THE DRAWINGS

For a more complete understanding of the present invention, and the advantages thereof, reference is now made to the following descriptions taken in conjunction with the accompanying drawings, wherein like numbers designate like objects, and in which:

**FIGURE 1** depicts an exemplary PWM data string in accordance with a preferred embodiment of the present invention;

**FIGURE 2** depicts a block diagram of an apparatus in accordance with a preferred embodiment of the present invention; and

**FIGURE 3** depicts a flowchart of a process in accordance with a preferred embodiment of the present invention.

### DETAILED DESCRIPTION OF THE INVENTION

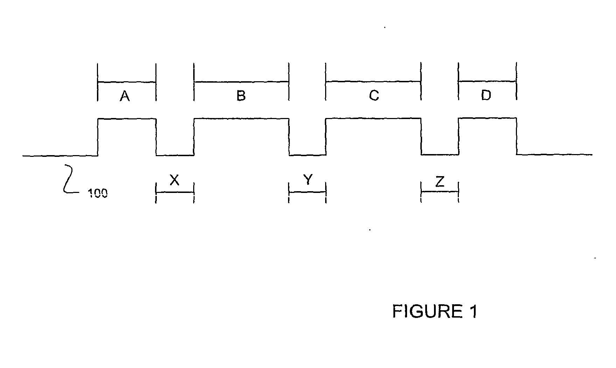

**FIGURES 1 through 3,** discussed below, and the various embodiments used to describe the principles of the present invention in this patent document are by way of illustration only and should not be construed in any way to limit the scope of the invention. Those skilled in the art will understand that the principles of the present invention may be implemented in any suitably arranged device. The numerous innovative teachings of the present application will be described with particular reference to the presently preferred embodiment.

The preferred embodiment provides a system and method for pulse-width-modulation (PWM) communications using an adaptive pulse-duration threshold. In this embodiment, a PWM device will analyze a data string from a PWM transmission from a second device, and adaptively determine an appropriate pulse-duration threshold for that communication. After doing so, the PWM device can then receive and transmit data as needed with the second device. This adaptive PWM protocol can enable effective communications with multiple devices with different configurations.

**Figure 1** shows a pulse waveform 100, with a series of on-pulses and off-states. It should be noted that while this example is made in reference to a wired direct-current waveform, this is merely an exemplary embodiment, and the those of skill in the art will recognize that the on-pulses and off-states are commonly implemented in RF and infrared/optical systems by using intermittent transmission bursts, and can be so implemented according to the claimed invention. Similarly, the claimed system and method can be implemented wherever PWM communications are used.

In **Figure 1,** the on-pulses have respective durations **A, B, C,** and **D,** and are separated by off-states having respective durations of **X, Y,** and **Z.** This figure is not drawn to scale for the examples used below.

The system of the preferred embodiment adaptively configures itself by receiving a data string as shown in **Figure 1** from a target device. As the data pulses are received, each on-pulse is treated as a separate data bit and its duration is recorded. When the system has received a specified number of bits, four in this example, it then averages the duration of the longest-duration on-pulse and the shortest-duration on-pulse of those bits.

The calculated average is then used as the duration threshold for designating a received on-pulse as a logical 1 or logical 0. The stored bits, and any further bits, are translated using this duration threshold. Further, the system may now compatibly translate using the same duration threshold.

In this way, the preferred system adaptively determines a duration threshold, and is thereafter able to communicate with the target device. Accordingly, the system of the preferred embodiment can effectively communicate with multiple devices using different PWM configurations.

In the example of **Figure 1**, assume that the designated durations are as follows:
**A** = 301 microseconds (us)
**B** = 511 us
**C** = 503 us
**D** = 296 us
**X**, **Y**, **Z** = 200 us

These figures might be typical for a nominal short-duration pulse of 300us, and a nominal long-duration pulse of 500us, with reasonable error. When the system has received these pulses, it will store the values, then average the longest duration **B** and the shortest duration **D**. The average, 403.5us, is then used as the threshold value for the PWM translation. In this example, the four-bit data string would then be translated as "0110."

While this example uses 4 bits to determine the duration threshold value, the preferred embodiment uses 16 bits for this calculation. Of course, those of skill in the art will realize that any number of bits can be used for this calculation, as long as at least one long-pulse and one short-pulse are received. For obvious reasons, if only long pulses or only short pulses are received, any calculated threshold value will be erroneous. In typical uses, 16 bits or more will ensure at least one long-pulse and one short-pulse.

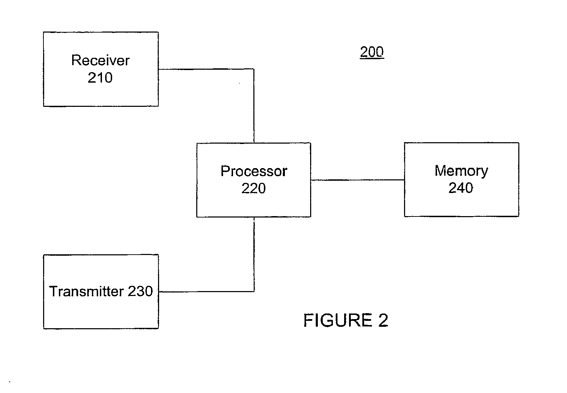

Figure 2 shows a block diagram of basic elements of an apparatus according to the preferred embodiment. Apparatus **200** includes a receiver **210**, which may be an optical or infrared light receiver, an RF receiver, a wired input, or any other receiver capable of receiving a PWM signal. Processor **220** can be any suitable processor, from a complex data processor to a simple programmable logic gate array, and is connected, directly or indirectly, to receive data from the receiver **210**. Memory **240** is connected to be written to and read from by processor **220**, and will typically store at least some instructions for the processor. Memory **240** can be any suitable volatile or non-volatile memory.

Further, a transmitter **230** is optionally connected to send PWM signals.

Of course, multiple receivers or transmitters can be included to allow PWM communications of different transmission types. Other optional elements include, but are not limited to, a display devise, a bus for connecting with other processing systems, a printer, and a removable media device.

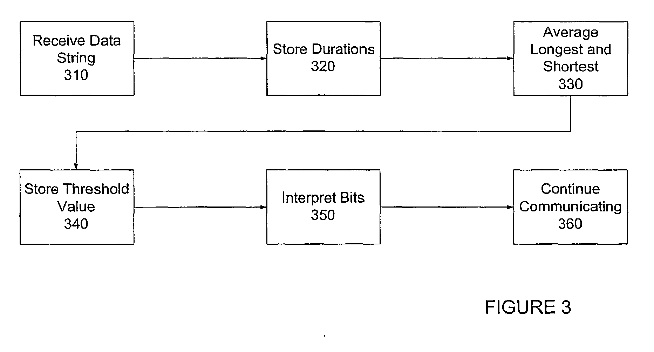

**Figure 3** depicts a flowchart of a process in accordance with a preferred embodiment. First, the system receives a multibit PWM data string (**step 310**) having at least one short-pulse and one long-pulse. Preferably, the data string has at least 16 bits, although more or less can be used, and a continuous stream of bits can be received.

The durations of the bits in the data string are stored (**step 320**). The longest-duration bit and the shortest-duration bit are averaged to determine an average duration **(step 330).** The average duration is stored as the threshold-duration value **(step 340).** Using the threshold-duration value, the system interprets the stored bits and any subsequent bits (**step 350**).

The system will continue communicating, receiving and optionally transmitting, using this configuration (**step 360**).

The process is repeated when the system must communicate with another device that has or could have a different PWM configuration.

Those of skill in the art will recognize that not all of the steps above must be performed in the order recited.

Those skilled in the art will recognize that, for simplicity and clarity, the full structure and operation of all delta processing systems suitable for use with the present invention is not being depicted or described herein. Instead, only so much of a data processing system as is unique to the present invention or necessary for an understanding of the present invention is depicted and described. The remainder of the construction and operation of data processing system may conform to any of the various current implementations and practices known in the art.

It is important to note that while the present invention has been described in the context of a fully functional system, those skilled in the art will appreciate that at least portions of the mechanism of the present invention are capable of being distributed in the form of a instructions contained within a machine usable medium in any of a variety of forms, and that the present invention applies equally regardless of the particular type of Instruction or signal bearing medium utilized to actually carry out the distribution. Examples of machine usable mediums include: non-volatile, hard-coded type mediums such as read only memories (ROMs) or erasable, electrically programmable read only memories (EEPROMs), user-recordable type mediums such as floppy disks, hard disk drives and compact disk read only memories (CD-ROMs) or digital versatile disks (DVDs), and transmission type mediums such as digital and analog communication links.

Although an exemplary embodiment of the present invention has been described in detail, those skilled in the art will understand that various changes substitutions, variations, and improvements of the invention disclosed herein may be made without departing from the invention in its broadest form.

None of the description in the present application should be read as implying that any particular element, step, or function is an essential element which must be included in the claim scope: THE SCOPE OF PATENTED SUBJECT MATTER IS DEFINED ONLY BY THE ALLOWED CLAIMS.

## Claims

1. A method for data communications, comprising:
receiving (310) a series of data pulses (100) having at least one first type of data pulse and at least one second type of data pulse, whereby the duration of said first type of data pulse is greater than the duration of said second type of data pulse;
storing (320) the duration of each data pulse received;
determine which data pulse from said first type of data pulses has the longest duration;
determine which data pulse from said second type of data pulses has the shortest duration;
calculating (330) the average of said longest-duration data pulse and said shortest-duration data pulse to determine a threshold value;
interpreting (350) pulses having a duration which is longer than the threshold value as a first type data pulse; and
interpreting (350) pulses having a duration which is shorter than the threshold value as a second type data pulse.

2. An apparatus (200) for data communications, comprising:
means (210) for receiving a series of data pulses (100) having at least one first type of data pulse and at least one second type of data pulse, whereby the duration of said first type of data pulse is greater than the duration of said second type of data pulse;
means (240) for storing the duration of each data pulse received;
means for determining which data pulse from said first type of data pulses has the longest duration;
means for determining which data pulse from said second type of data pulses has the shortest duration;
means (220) for calculating the average of said longest-duration data pulse and said shortest-duration data pulse to determine a threshold value;
means for interpreting pulses having a duration which is longer than the threshold value as a first type data pulse; and
means for interpreting pulses having a duration which is shorter than the threshold value as a second type data pulse.

3. A computer readable medium comprising computer code for carrying out the method of claim 1 when run on a computer.

4. The method of claim 1, or the apparatus of claim 2, or the computer program product of claim 3, wherein the series of data pulses comprises 16 pulses.

5. The method of claim 1, or the apparatus of claim 2, or the computer program product of claim 3, wherein the data pulses (100) are bursts of infrared light.

6. The method of claim 1, or the apparatus of claim 2, or the computer program product of claim 3, wherein the data pulses (100) are bursts of radio-frequency energy.

7. The method of claim 1, or the apparatus of claim 2, or the computer product of claim 3, wherein the data pulses (100) are represented as changes in a direct-current voltage.

8. The method of claim 1, or the computer program product of claim 3, further comprising transmitting pulse-width-modulated data according to the threshold value.

9. The method of claim 1, or the apparatus of claim 2, or the computer program product of claim 3, wherein each pulse (100) represents a data bit.

10. The apparatus of claim 2, further comprising means for transmitting pulse-width-modulated data according to the threshold value.

## Patentansprüche

1. Datenübertragungsverfahren, umfassend:
- Empfang (310) einer Reihe von Datenimpulsen (100) mit mindestens einem ersten Datenimpulstyp und mindestens einem zweiten Datenimpulstyp , wobei der erste Datenimpulstyp länger dauert als der zweite Datenimpulstyp ;
- Speicherung (320) der Dauer von jedem empfangenen Datenimpuls ;
- Bestimmung welcher Datenimpuls vom ersten Datentimpulstyp am längsten dauert;
- Bestimmung welcher Datenimpuls vom zweiten Datentimpulstyp am kürzesten dauert;
- Berechnung (330) des Mittels aus dem Datenimpuls, der am längsten dauert und dem Datenimpuls, der am kürzten dauert, um einen Schwellenwert zu bestimmen;
- Interpretation (350) der Impulse, die eine längere Dauer aufweisen als der Schwellenwert als ersten Datenimpulstyp;
- Interpretation (350) der Impulse, die eine kürzere Dauer aufweisen als der Schwellenwert als zweiten Datenimpulstyp.

2. Vorrichtung (200) zur Datenübertragung, umfassend :
- Mittel (210) zum Empfang einer Reihe von Datenimpulsen (100) mit mindestens einem ersten Datenimpulstyp und mindestens einem zweiten Datenimpulstyp, wobei der erste Datenimpulstyp länger dauert als der zweite Datenimpulstyp ;
- Mittel (240) zur Speicherung (320) der Dauer von jedem empfangenen Datenimpuls ;
- Bestimmung welcher Datenimpuls vom ersten Datentimpulstyp am längsten dauert;
- Bestimmung welcher Datenimpuls vom zweiten Datentimpulstyp am kürzesten dauert;
- Berechnung (330) des Mittels aus dem Datenimpuls der am längsten dauert und dem Datenimpuls der am kürzten dauert, um einen Schwellenwert zu bestimmen;
- Mittel zur Interpretation (350) der Impulse, die eine längere Dauer aufweisen als der Schwellenwert als ersten Datenimpulstyp;
- Mittel zur Interpretation (350) der Impulse, die eine kürzere Dauer aufweisen als der Schwellenwert als zweiten Datenimpulstyp.

3. Ein computer - lesbarer Datenträger umfassend einen Computercode, der, wenn auf einem Computer laufend, das Verfahren nach Anspruch 1 ausführt.

4. Verfahren nach Anspruch 1 oder die Vorrichtung nach Anspruch 2 oder das Computerprogrammprodukt nach Anspruch 3, wobei die Reihe von Datenimpulsen 16 Impulse umfasst.

5. Verfahren nach Anspruch 1 oder die Vorrichtung nach Anspruch 2 oder das Computerprogrammprodukt nach Anspruch 3, wobei die Datenimpulse ( 100) Infrarotlicht - Signalfolgen sind.

6. Verfahren nach Anspruch 1 oder die Vorrichtung nach Anspruch 2 oder das Computerprogrammprodukt nach Anspruch 3, wobei die Datenimpulse ( 100) Radiofrequenzenergie - Signalfolgen sind.

7. Verfahren nach Anspruch 1 oder die Vorrichtung nach Anspruch 2 oder das Computerprogrammprodukt nach Anspruch 3, wobei die Datenimpulse ( 100) als Änderungen einer Gleichspannung dargestellt werden.

8. Verfahren nach Anspruch 1 oder das Computerprogrammprodukt nach Anspruch 3, außerdem umfassend die Übertragung von Impulsbreite - modulierten Signalen entsprechend dem Schwellenwert.

9. Verfahren nach Anspruch 1 oder die Vorrichtung nach Anspruch 2 oder das Computerprogrammprodukt nach Anspruch 3, wobei jeder Impuls (100) ein Datenbit darstellt.

10. Vorrichtung nach Anspruch 2, umfassend außerdem Mittel zur Übertragung von Impulsbreite - modulierten Signalen entsprechend dem Schwellenwert.

## Revendications

1. Procédé de communication de données, comprenant :
la réception (310) d'une série d'impulsions de données (100) présentant au moins un premier type d'impulsion de données et au moins un second type d'impulsion de données, la durée dudit premier type d'impulsion de données étant supérieure à la durée dudit second type d'impulsion de données ;
la mémorisation (320) de la durée de chaque impulsion de données reçue ;
la détermination de l'impulsion de données dudit premier type d'impulsions de données qui présente la durée la plus longue ;
la détermination de l'impulsion de données dudit second type d'impulsions de données qui présente la durée la plus courte ;
le calcul (330) de la moyenne de ladite impulsion de données de durée la plus longue et de ladite impulsion de données de durée la plus courte afin de déterminer une valeur de seuil ;
l'interprétation (350) des impulsions présentant une durée qui est plus longue que la valeur de seuil en tant qu'impulsion de données de premier type ; et
l'interprétation (350) des impulsions présentant une durée qui est plus courte que la valeur de seuil en tant qu'impulsion de données de second type.

2. Appareil (200) de communication de données, comprenant :
des moyens (210) pour recevoir une série d'impulsions de données (100) présentant au moins un premier type d'impulsion de données et au moins un second type d'impulsion de données, la durée dudit premier type d'impulsion de données étant supérieure à la durée dudit second type d'impulsion de données;
des moyens (240) pour mémoriser la durée de chaque impulsion de données reçue ;
des moyens pour déterminer l'impulsion de données dudit premier type d'impulsions de données qui présente la durée la plus longue ;
des moyens pour déterminer l'impulsion de données dudit second type d'impulsions de données qui présente la durée la plus courte ;
des moyens (220) pour calculer la moyenne de ladite impulsion de données de durée la plus longue et de ladite impulsion de données de durée la plus courte afin de déterminer une valeur de seuil ;
des moyens pour interpréter les impulsions présentant une durée qui est plus longue que la valeur de seuil en tant qu'impulsion de données de premier type ; et
des moyens pour interpréter les impulsions présentant une durée qui est plus courte que la valeur de seuil en tant qu'impulsion de données de second type.

3. Support lisible par un ordinateur, qui comprend un code d'ordinateur pour mettre en oeuvre le procédé selon la revendication 1 lors de son exécution sur un ordinateur.

4. Procédé selon la revendication 1, ou appareil selon la revendication 2 ou produit de programme d'ordinateur selon la revendication 3, dans lesquels la série d'impulsions de données comprend 16 impulsions.

5. Procédé selon la revendication 1, ou appareil selon la revendication 2 ou produit de programme d'ordinateur selon la revendication 3, dans lesquels les impulsions de données (100) sont des salves de lumière infrarouge.

6. Procédé selon la revendication 1, ou appareil selon la revendication 2 ou produit de programme d'ordinateur selon la revendication 3, dans lesquels les impulsions de données (100) sont des salves d'énergie radioélectrique.

7. Procédé selon la revendication 1, ou appareil selon la revendication 2 ou produit de programme d'ordinateur selon la revendication 3, dans lesquels les impulsions de données (100) sont représentées sous forme de variations de courant continu.

8. Procédé selon la revendication 1, ou produit de programme d'ordinateur selon la revendication 3, comprenant, en outre, la transmission de données de largeur d'impulsion modulée en fonction de la valeur de seuil.

9. Procédé selon la revendication 1, ou appareil selon la revendication 2 ou produit de programme d'ordinateur selon la revendication 3, dans lesquels chaque impulsion (100) représente un bit de données.

10. Appareil selon la revendication 2, comprenant, en outre, des moyens pour transmettre des données de largeur d'impulsion modulée en fonction de la valeur de seuil.
